# EUROPEAN PATENT SPECIFICATION

(11) **EP 1 907 204 B1**
(45) Date of publication and mention of the grant of the patent: **12.03.2014**
(21) Application number: 06749768.5
(22) Date of filing: 11.04.2006
(51) Int. Cl.: B32B 17/10, C03C 27/12, B32B 37/10

(54) **LOW MOISTURE POLYMER SHEETS FOR NON AUTOCLAVE PROCESS**
POLYMERBLÄTTER MIT GERINGEM FEUCHTIGKEITSGEHALT FÜR EIN NICHT-AUTOKLAVEN VERFAHREN
FEUILLES POLYMERIQUES A FAIBLE HUMIDITE POUR PROCEDE HORS AUTOCLAVE

(30) Priority: 15.04.2005 US 106598
(43) Date of publication of application: 09.04.2008
(73) Proprietor: Solutia Inc., St. Louis, Missouri 63141 (US)
(72) Inventor: MA, Yinong, Longmeadow, Massachusetts 01106 (US); KARAGIANNIS, Aristotelis, Amherst, Massachusetts 01002 (US); KORAN, Francois, Longmeadow, MA 01106 (US)
(74) Representative: Beckmann, Claus
(86) International application number: PCT/US2006/013492
(87) International publication number: WO 2006/113225

(56) References cited:
- EP-A- 0 331 648
- EP-A- 1 384 745
- DE-A1- 19 643 404
- US-A- 3 234 062
- US-A- 3 434 915
- US-A- 3 920 878
- US-A- 4 952 457
- US-A- 5 536 347
- US-A1- 2003 148 114

## Description

### FIELD OF THE INVENTION

The present invention is in the field of polymer interlayers used in multiple layer glass panels, and specifically the present invention is in the field of polymer interlayers having relatively low moisture content.

### BACKGROUND

Poly(vinyl butyral) (PVB) is commonly used in the manufacture of polymer sheets that can be used as interlayers in light-transmitting laminates such as safety glass or polymeric laminates. Safety glass typically refers to a transparent laminate comprising a poly(vinyl butyral) sheet disposed between two panes of glass. Safety glass often is used to provide a transparent barrier in architectural and automotive openings. Its main function is to absorb energy, such as that caused by a blow from an object, without allowing penetration through the opening.

A recently disclosed method of manufacturing safety glass is provided in U.S.

Patent Application 2003/0148114 A1 (Bourcier et al.). That method involves, among various embodiments, the use of an applied pressure, non autoclave process for glass lamination. Polymer sheets used in the applied pressure, non autoclave process most desirably have low moisture content, which facilitates the lamination process. Other non autoclave methods of laminating safety glass are also known in the art and typically preferentially employ low moisture polymer sheets. Among the various techniques that have been used to produce low moisture content polymer sheet, however, many, if not all, increase the complexity and/or difficulty of the manufacturing process.

Accordingly, further improved methods are needed for the manufacture of multiple layer glass panels that are laminated using non autoclave processes such as those disclosed in U.S. Patent Application 2003/0148114 A1, among others.

### SUMMARY OF THE INVENTION

It has now been surprisingly discovered, according to the present invention, that non autoclave type glass laminating processes can be made more efficient by the use of low moisture content poly(vinyl butyral) polymer sheets that have been produced by using plasticized poly(vinyl butyral) having a well defined, low residual hydroxyl content.

### DETAILED DESCRIPTION

It has been surprisingly discovered that the use of a poly(vinyl butyral) having a relatively low and well defined residual hydroxyl content permits the production of a poly(vinyl butyral) sheet that will equilibrate to a repeatable, relatively low, and desirable moisture content with little or no further conditioning, and which is suitable for use in non autoclave processes.

The present invention is directed to methods for manufacturing multiple layer glass panels comprising a low moisture content poly(vinyl butyral) sheet using non autoclave processes, as those processes are described in detail elsewhere herein. Whereas conventional methods for producing low moisture content poly(vinyl butyral) sheets have involved, among other techniques, the use of ovens, infrared radiation, and microwave radiation to condition poly(vinyl butyral) sheets, the present invention provides a method for producing low moisture content poly(vinyl butyral) sheets that involves manufacturing the sheets with a relatively low residual hydroxyl content. The resulting low residual hydroxyl content poly(vinyl butyral) sheets of the present invention, with little or no additional conditioning, equilibrate to the desirable relatively low levels of moisture that are preferred for use in non autoclave lamination. This advantageously obviates the need for a conditioning step, or reduces the time and expense required to properly condition a poly(vinyl butyral) sheet prior to and during lamination.

As is well known in the art, poly(vinyl butyral) resin is typically produced by hydrolyzing poly(vinyl acetate) to poly(vinyl alcohol), and then reacting the poly(vinyl alcohol) with an acid to produce poly(vinyl butyral). Because neither step is typically complete, poly(vinyl butyral) will generally have a residual acetate content and a residual hydroxyl content in addition to the vinyl butyral content, wherein the residual acetate content is expressed as poly(vinyl acetate), and the residual hydroxyl content is expressed as poly(vinyl alcohol). As used herein, "residual hydroxyl content" is measure as poly(vinyl alcohol), and "residual acetate content" is measure as poly(vinyl acetate). As disclosed in detail in Vinyl Acetal Polymers, in Encyclopedia of Polymer Science & technology, 3rd edition, Volume 8, pages 381-399, by B.E. Wade (2003)(Wade), either an aqueous process or a solvent process is typically used to form poly(vinyl butyral) from poly(vinyl acetate). In either case, the various process adjustments that can be made to control the final ratios of residual acetate content, residual hydroxyl content, and poly(vinyl butyral) are well known in the art, and several are described in detail in Wade. In particular, an increase in substrate to reactant ratio, with a corresponding alteration of reaction time and temperature, can be used to produce the desired residual hydroxyl content.

In various embodiments of the present invention, a poly(vinyl butyral) polymer sheet has a residual hydroxyl content (poly(vinyl alcohol)), measured as a weight percent of the poly(vinyl butyral) resin, of 10.0 to 18.0, 12 to 18.0, 14.0 to 17.0, or less than 18.0, less than 16.0, less than 14.0, or less than 12.0.

Poly(vinyl butyral) sheets made from resin having residual hydroxyl content in these ranges, according to the present invention, have a moisture content, at a relative humidity of 25%, of less than 0.35, less than 0.30, less than 0.25, or less than 0.20. Other variables that affect final moisture content of a polymer sheet, for example plasticizer content and type and residual acetal and acetate levels, can be adjusted, as is known in the art, to provide these desired moisture contents at the indicated residual hydroxyl content level.

As will be described in more detail below, the low moisture content poly(vinyl butyral) sheets of the present invention are very useful in non autoclave lamination methods, and particularly applied pressure, non autoclave methods of laminating multiple layer glass panels comprising such poly(vinyl butyral) sheets.

In one typical embodiment, a single poly(vinyl butyral) sheet of the present invention is disposed between two layers of glass to form a stack, and then the stack is laminated using a non autoclave process. As used herein, a "stack" is any multiple layer construct that has various individual layers of polymeric materials, glass, and, optionally, other types of layers, disposed in contact with one another. A stack is formed prior to lamination, and, through the lamination process, the stack is formed into a finished multiple layer glass panel.

In various other embodiments, additional layers can be added to a stack prior to lamination, including, but not limited to, polymer film layers (as described below), polymer sheet layers (as described below), further poly(vinyl butyral) sheets having the relatively low residual hydroxyl contents described above, and further glass layers.

In various embodiments, a stack is formed that includes two poly(vinyl butyral) sheets of the present invention between which is disposed a polymer film. In other embodiments, a stack includes a poly(vinyl butyral) sheet of the present invention and a polymer sheet, between which is disposed a polymer film. Typically, any of the stacks just described in this paragraph can be formed with the polymeric layers disposed between two panes of glass.

In other embodiments, a bilayer stack is formed having the following configuration: glass//poly(vinyl butyral) sheet of the present invention//polymer film//glass. Lamination of this stack using a non autoclave process results in a bilayer in which the second pane of glass is removed by separating it from the rest of the finished product at the polymer film//glass interface. Further polymeric layers can be incorporated into the just described bilayer, where desired, for example by using two iterations of poly(vinyl butyral) sheet//polymer film between the two panes of glass.

### NON AUTOCLAVE PROCESSES

As used herein, a "non autoclave process" for laminating multiple layer windows is a laminating process that does not require the use of standard autoclaving conditions to achieve an acceptable laminated product. Among non autoclave processes are vacuum bag or ring non autoclave processes and nip roll non autoclave processes.

### VACUUM BAG OR RING NON AUTOCLAVE PROCESSES

The polymer sheets of the present invention are useful in vacuum bag, non autoclave processes that do not require an applied pressure, other than that induced by application of a vacuum, to laminate a multiple layer glass panel. One process for employing a vacuum bag non autoclave technique is disclosed in U.S. Patent 5,536,347 (hereinafter, the '347 patent). Low moisture content polymer sheets, such as those disclosed herein, can improve the process robustness and expand the operating window (process temperature) of the non autoclave methods disclosed in the '347 patent.

Another applied vacuum, non autoclave process for which polymer sheets of the present invention are useful employ a vacuum chamber. The "Vulcano" process (Omnia, Italy) involves inserting a prelaminate in a sealed chamber, after which vacuum is exerted while the temperature is raised to effect the lamination.

### APPLIED PRESSURE, NON AUTOCLAVE PROCESSES

The polymer sheets of the present invention are particularly useful in applied pressure, non autoclave processes, which include a nip roll method that employs relatively high heat.

A particularly useful nip roll process has been disclosed in U.S. Patent Application 2003/148114. Typically, the glass sheets and poly(vinyl butyral) sheet and, optionally, other layers are assembled together and excess poly(vinyl butyral) sheet outboard of the edges of the glass is removed by trimming (forming a pre-press). Cutting to the appropriate size may be done before or after assembly, as desired, or alternatively following the tacking step described hereafter.

The layers of the pre-press are brought to a temperature sufficient to tack the layers together in a subsequent tacking step. Tack temperature may vary with the formulation of the poly(vinyl butyral) layer (or other plastic layer used). For a low modulus interlayer, sufficient tack to keep the layers together may be achieved at room temperature. For most laminates containing a single poly(vinyl butyral) sheet between two glass sheets, sufficient tack can be developed at a tack temperature between about 40°C and about 130°C, preferably between about 70°C and about 100°C. A glass//poly(vinyl butyral)//glass assembly, which at this stage is referred to as a pre-press, may be brought to tacking temperature in a pre-heater unit comprising an oven enclosure equipped with an array of infrared heater tubes through which the laminate is conveyed on a bed of conveyor rollers powered by a drive motor. Alternatively, convection heaters, microwaves, and other equivalent forms of supplying heat, or combinations thereof, also may be used to preheat the laminates.

The assembly of glass and poly(vinyl butyral) interlayer then is subjected to a short term tacking pressure sufficient to remove excess interlayer-glass interfacial air, which causes the layers to adhere to each other and which seals the edges to prevent air re-entry. The resulting combination of tacked layers is herein called a pre-laminate. The preferred technique of applying a tacking pressure is to utilize a nip roll means, which is known to those skilled in the art of safety glass laminate manufacture. A nip roll means can consist of a set of opposing nip rolls with resilient surfaces, such as rubber, which rotate in opposite directions to pass the pre-press assembly through a nip between such rolls. The pressure exerted on the assembly in the short term pressure application preferably is for a time less than about 15 minutes. Using a nip roll short term pressure application, the pressure application preferably is for a time ranging from about 0.02 to about 100 seconds, more preferably for a time ranging from about 0.04 to 50.0 seconds. These time periods are similar in scale to the tacking steps found in conventional lamination lines, and far shorter than the typical 60 to 150 minute commercial autoclave pressure cycle.

The invention is not limited to the use of a nip roll means to develop the de-airing and tacking pressure, however. Provided some minimal short term pressure application is exerted over the laminate, the means for applying the tacking pressure are not critical. Inflatable bags, a press using platens, continuous belts, multiple or staggered rollers, or the like, also could be used.

As used herein, short term tacking pressure application describes pressure on a pre-press assembly for a time sufficient to de-air and tack the interlayer to the glass without necessarily causing permanent flow of the interlayer or forcing complete dissolution of air into the interlayer as is encountered using an autoclave. The minimum pressure that should be applied preferably is at least about 5 pounds per square inch. The nip roll is a preferred means of applying short term pressure application. The footprint of the rolls (area over which the roll applies pressure) on the laminate varies depending on the nip roll design, and is typically about 10 millimeters, although this dimension is not critical. The force exerted by the rollers on the laminate preferably ranges from about 2 to 2000 pounds per linear inch of roller (2-2000 PLI; 36-35720 kilogram per linear meter), although pressures outside this range are usable. The time during which nip pressure is applied varies with the speed of the laminate through the nip roll, but is generally not less than 0.02 or more than 100 seconds. As understood by those skilled in the art, the pressure exerted by a nip roll assembly is not sufficient to accomplish the combination of results achieved in a high-pressure autoclave - that is, drive air into the bulk poly(vinyl butyral), eliminate poly(vinyl butyral) surface roughness, lower residual stresses, or promote complete adhesion at the poly(vinyl butyral)/glass interface.

After tacking pressure is applied, the tacked laminate is heated (in an oven, or optionally in an autoclave at less than standard autoclave pressure) for a time and at a temperature sufficient to develop adhesion, conform the poly(vinyl butyral) interlayer to the surfaces of and spacing between the substrates, and relax stresses to acceptable levels and dissolve air. This heat history can be similar to that developed in a conventional autoclave process, but is not so limited. The tacked assembly may be heat treated in such devices as a finishing heater unit, including oven enclosures equipped with an array of infrared heater tubes, through which the assembly is conveyed on a bed of conveyor rollers powered by a drive motor. Alternatively, convection heaters, microwaves, and other equivalent forms of supplying heat, or combinations thereof, also may be used to finish the laminates.

In general, temperatures in the disclosed process exceed typical autoclave temperatures (120°C to 150°C), thus accelerating the lamination process. At about atmospheric pressures, pre-press assemblies can be finished, according to this laminating method, by heating to temperatures ranging from about 115°C to 230°C for durations preferably of about 0.5 to 180 minutes, and more preferably about 2 to 60 minutes. Finishing temperatures in the upper region of the noted temperature range - about 150°C to 220°C are preferably used with the low hydroxyl poly(vinyl butyral) sheets of the present invention. Lower temperatures can be used with poly(vinyl butyral) low hydroxyl sheets of the present invention for heat sensitive applications, such as applications in which a polyester layer such as poly(ethylene terephthalate) is included in a polymer stack.

Following heat treatment, the finished laminates are removed from the oven and allowed to cool. Practicing this process at atmospheric (non-autoclave) pressures is preferred. Although standard autoclave pressures are not required according to the present invention, limited pressures, preferably less than about 3 atmospheres, may be used to enhance finishing of the laminates without bubble formation.

It is also possible to carry out the finishing step using multiple heating cycles. For example, a dual cycle would be characterized by an initial heat soak, a cool-down to a temperature near room temperature, a second heat soak at a temperature that may or may not be equal to the initial heat soak temperature, and a final cool-down to room temperature. Finishing temperatures in each of the heating cycles may range from 115°C to 230°C for durations of 0.5 to 180 minutes. The heating steps may be performed back-to-back, or may be separated by large amounts of time, so that the intermediate cooling, and/or holding, step may range from 0 minutes to 50,000 minutes. Intermediate cooling step temperatures may range from -20°C to 100°C It also is within the scope of this method to carry out the tacking and finishing steps at different times. For example, a series of pre-laminates could be batch produced, using the tacking portion of the process, which then are allowed to cool down to room temperature. Final heat finishing, as described herein, can be conducted at a later time convenient to the laminator (e.g., a few hours later, the next day, or any later time). This type of non-continuous operation lends itself well to a batch process, in which all the prelaminates are produced ahead of time, staged in racks, and heated together in a final finishing step, similar to an autoclave finishing step, but without the use of autoclave pressure.

### POLYMER SHEET

The following description of "polymer sheet" applies to polymer sheets that are used in multiple layer panels of the present invention that are not the low hydroxyl poly(vinyl butyral) sheets described above. For the poly(vinyl butyral) sheets described above having the defined low residual hydroxyl content, the following description applies with the exceptions that the hydroxyl content of the poly(vinyl butyral) sheets described above are given in the ranges above, and the polymer used is poly(vinyl butyral).

As used herein, a "polymer sheet" means any thermoplastic polymer composition formed by any suitable method into a thin layer that is suitable alone, or in stacks of more than one layer, for use as an interlayer that provides adequate penetration resistance and glass retention properties to laminated glazing panels. Plasticized poly(vinyl butyral) is most commonly used to form polymer sheets.

The following section describes the various materials that can be used to form polymer sheets of the present invention.

In various embodiments of the present invention, a polymer sheet layer is between 0.08 to 3.0 millimeters, 0.15 to 3.0 millimeters, 0.25 to 3.0 millimeters, 0.25 to 1.0 millimeters, 0.25 to 0.5 millimeters, or 0.3 to 0.4 millimeters in thickness.

The polymer sheets of the present invention can comprise any suitable polymer, and, in a preferred embodiment, the polymer sheet comprises poly(vinyl butyral). In any of the embodiments of the present invention given herein that comprise poly(vinyl butyral) as the polymeric component of the polymer sheet, another embodiment is included in which the polymer component consists of or consists essentially of poly(vinyl butyral). In these embodiments, any of the variations in additives, including plasticizers, disclosed herein can be used with the polymer sheet having a polymer consisting of or consisting essentially of poly(vinyl butyral).

In one embodiment, the polymer sheet comprises a polymer based on partially acetalized poly(vinyl alcohol)s. In another embodiment, the polymer sheet comprises a polymer selected from the group consisting of poly(vinyl butyral), polyurethane, polyvinyl chloride, poly(ethylene vinyl acetate), combinations thereof, and the like. In further embodiments the polymer sheet comprises poly(vinyl butyral) and one or more other polymers. In any of the sections herein in which preferred ranges, values, and/or methods are given specifically for poly(vinyl butyral) (for example, and without limitation, for plasticizers, component percentages, thicknesses, and characteristic-enhancing additives), those ranges also apply, where applicable, to the other polymers and polymer blends disclosed herein as useful as components in polymer sheets.

For embodiments comprising poly(vinyl butyral), the poly(vinyl butyral) can be produced by known acetalization processes that involve reacting poly(vinyl alcohol) (PVOH) with butyraldehyde in the presence of an acid catalyst, followed by neutralization of the catalyst, separation, stabilization, and drying of the resin.

In various embodiments, resin used to form polymer sheets of the present invention comprises 10 to 35 weight percent (wt. %) hydroxyl groups calculated as poly(vinyl alcohol), 13 to 30 wt. % hydroxyl groups calculated as poly(vinyl alcohol), or 15 to 22 wt. % hydroxyl groups calculated as poly(vinyl alcohol). The resin can also comprise less than 15 wt. %, 13 wt. %, 11 wt. %, 9 wt. %, 7 wt. %, 5 wt. %, or less than 3 wt. % residual acetate, with the balance being an acetal, preferably butyraldehyde acetal, but optionally including other acetal groups in a minor amount, e.g., a 2-ethyl hexanal group (see, for example, U.S. Patent 5,137,954).

In various embodiments, the polymer sheet comprises poly(vinyl butyral) having a molecular weight at least 30,000, 40,000, 50,000, 55,000, 60,000, 65,000, 70,000, 120,000, 250,000, or at least 350,000 grams per mole (g/mole or Daltons). Small quantities of a dialdehyde or trialdehyde can also be added during the acetalization step to increase molecular weight to at least 350 g/mole and broaden the molecular weight distribution (see, for example, U.S. Patents 4,902,464; 4,874,814; 4,814,529; 4,654,179). As used herein, the term "molecular weight" means the weight average molecular weight.

Various adhesion control agents can be used in polymer sheets of the present invention, including sodium acetate, potassium acetate, and magnesium salts. Magnesium salts that can be used with these embodiments of the present invention include, but are not limited to, those disclosed in U.S. Patent 5,728,472, such as magnesium salicylate, magnesium nicotinate, magnesium di-(2-aminobenzoate), magnesium di-(3-hydroxy-2-napthoate), and magnesium bis(2-ethyl butyrate)(chemical abstracts number 79992-76-0). In various embodiments of the present invention the magnesium salt is magnesium bis(2-ethyl butyrate).

Additives may be incorporated into the polymer sheet to enhance its performance in a final product. Such additives include, but are not limited to, the following agents: antiblocking agents, plasticizers, dyes, pigments, stabilizers (e.g., ultraviolet stabilizers), antioxidants, flame retardants, UV absorbers, IR absorbers, and combinations of the foregoing additives, and the like, as are known in the art.

In various embodiments of polymer sheets of the present invention, the polymer sheets can comprise 20 to 60, 25 to 60, 20 to 80, 10 to 70, or 10 to 100 parts plasticizer per one hundred parts of resin (phr). Of course other quantities can be used as is appropriate for the particular application. In some embodiments, the plasticizer has a hydrocarbon segment of fewer than 20, fewer than 15, fewer than 12, or fewer than 10 carbon atoms.

The amount of plasticizer can be adjusted to affect the glass transition temperature (T_{g}) of the poly(vinyl butyral) sheet. In general, higher amounts of plasticizer are added to decrease the Tg. Poly(vinyl butyral) polymer sheets of the present invention can have a T_{g} of, for example, 40°C or less, 35°C or less, 30°C, less than 25°C, less than 20°C, less than 15°C, or less than 10°C, while being greater than -15°C.

Any suitable plasticizers can be added to the polymer resins of the present invention in order to form the polymer sheets. Plasticizers used in the polymer sheets of the present invention can include esters of a polybasic acid or a polyhydric alcohol, among others. Suitable plasticizers include, for example, triethylene glycol di-(2-ethylbutyrate), triethylene glycol di-(2-ethylhexanoate), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, polymeric plasticizers such as the oil-modified sebacic alkyds, and mixtures of phosphates and adipates such as disclosed in U.S. Pat. No. 3,841,890 and adipates such as disclosed in U.S. Pat. No. 4,144,217, and mixtures and combinations of the foregoing. Other plasticizers that can be used are mixed adipates made from C₄ to C₉ alkyl alcohols and cyclo C₄ to C₁₀ alcohols, as disclosed in U.S. Pat. No. 5,013,779 and C₆ to C₈ adipate esters, such as hexyl adipate. In various embodiments, the plasticizer used is dihexyl adipate and/or triethylene glycol di-(2 ethylhexanoate).

Any suitable method can be used to produce the polymer sheets of the present invention. Details of suitable processes for making poly(vinyl butyral) are known to those skilled in the art (see, for example, U.S. Patents 2,282,057 and 2,282,026). In one embodiment, the solvent method described in Vinyl Acetal Polymers, in Encyclopedia of Polymer Science & Technology, 3rd edition; Volume 8, pages 381-399, by B.E. Wade (2003) can be used. In another embodiment, the aqueous method described therein can be used. Poly(vinyl butyral) is commercially available in various forms from, for example, Solutia Inc., St. Louis, Missouri as Butvar™ resin.

As used herein, "resin" refers to the polymeric (for example poly(vinyl butyral)) component that is removed from the mixture that results from the acid catalysis and subsequent neutralization of the polymeric precursors. Resin will generally have other components in addition to the polymer, for example poly(vinyl butyral), such as acetates, salts, and alcohols. As used herein, "melt" refers to a melted mixture of resin with a plasticizer and optionally other additives, for example, antiblocking agents.

One exemplary method of forming a poly(vinyl butyral) sheet comprises extruding molten poly(vinyl butyral) comprising resin, plasticizer, and additives - the melt - by forcing the melt through a sheet die (for example, a die having an opening that is substantially greater in one dimension than in a perpendicular dimension). Another exemplary method of forming a poly(vinyl butyral) sheet comprises casting a melt from a die onto a roller, solidifying the resin, and subsequently removing the solidified resin as a sheet.

### POLYMER FILM

As used herein, a "polymer film" means a relatively thin and rigid polymer layer that functions as a performance enhancing layer. Polymer films differ from polymer sheets, as used herein, in that polymer films do not themselves provide the necessary penetration resistance and glass retention properties to a multiple layer glazing structure, but rather provide performance improvements, such as infrared absorption character. Poly(ethylene terephthalate) is most commonly used as a polymer film.

Polymer films used in the present invention can be any suitable film that is sufficiently rigid to provide a relatively flat, stable surface, for example those polymer films conventionally used as a performance enhancing layer in multiple layer glass panels. The polymer film is preferably optically transparent (i.e. objects adjacent one side of the layer can be comfortably seen by the eye of a particular observer looking through the layer from the other side), and usually has a greater, in some embodiments significantly greater, tensile modulus regardless of composition than that of the adjacent polymer sheet. In various embodiments, the polymer film comprises a thermoplastic material. Among thermoplastic materials having suitable properties are nylons, polyurethanes, acrylics, polycarbonates, polyolefins such as polypropylene, cellulose acetates and triacetates, vinyl chloride polymers and copolymers and the like. In various embodiments, the polymer film comprises materials such as re-stretched thermoplastic films having the noted properties, which include polyesters. In various embodiments, the polymer film comprises or consists of poly(ethylene terephthalate), and, in various embodiments, the polyethylene terephthalate has been biaxially stretched to improve strength, and/or has been heat stabilized to provide low shrinkage characteristics when subjected to elevated temperatures (e.g. less than 2% shrinkage in both directions after 30 minutes at 150°C).

In various embodiments, the polymer film can have a thickness of 0.013 millimeters to 0.20 millimeters, 0.025 millimeters to 0.1 millimeters, or 0.04 to 0.06 millimeters. The polymer film can optionally be surface treated or coated with a functional performance layer to improve one or more properties, such as adhesion or infrared radiation reflection. These functional performance layers include, for example, a multi-layer stack for reflecting infra-red solar radiation and transmitting visible light when exposed to sunlight. This multi-layer stack is known in the art (see, for example, WO 88/01230 and U.S. Patent 4,799,745) and can comprise, for example, one or more Angstroms-thick metal layers and one or more (for example two) sequentially deposited, optically cooperating dielectric layers. As is also known (see, for example, U.S. Patents 4,017,661 and 4,786,783), the metal layer(s) may optionally be electrically resistance heated for defrosting or defogging of any associated glass layers. Various coating and surface treatment techniques for poly(ethylene terephthalate) film and other polymer films that can be used with the present invention are disclosed in published European Application No. 0157030. Polymer films of the present invention can also include a hardcoat and/or and antifog layer, as are known in the art. Polymer films of the present invention can also include pigments, printed patterns, and images, as known in the art.

The present invention includes methods of making a multiple layer glass panel, comprising using an applied pressure, non autoclave process, as described elsewhere herein, to form a multiple layer glass panel comprising a poly(vinyl butyral) sheet having a moisture content, at a relative humidity of 25%, of less than 0.35, less than 0.30, less than 0.25, or less than 0.20 as a weight percent of the sheet, and/or a residual hydroxyl content of 10.0 to 18.0, 12 to 18.0, 14.0 to 17.0, or less than 18.0, less than 16.0, less than 14.0, or less than 12.0 as measure as poly(vinyl alcohol) weight percent of the poly(vinyl butyral) resin used to form the sheet.

The present invention also includes methods of making a multiple layer glass panel; comprising forming a stack of any of the layered constructs given herein, and laminating the stack using an applied pressure, non autoclave process.

The present invention includes multiple layer glazing panels, and specifically multiple layer glass panels such as architectural safety glass and automobile windshields, made by any of the methods of the present invention.

In addition to the embodiments given above, other embodiments comprise a rigid glazing substrate other than glass. In these embodiments, the rigid substrate can comprise acrylic, Plexiglass®, Lexan®, and other plastics, such as polycarbonate, that are conventionally used as glazings.

Various polymer sheet and/or laminated glass characteristics and measuring techniques will now be described for use with the present invention.

Moisture content of a polymer sheet is determined using a Karl Fischer Automatic Titroprocessor (Brinkmann Karl Fischer Metrohm^{®} model #831 Coulometer in tandem with Brinkmann Karl Fischer model #832 Thermoprep - available from Brinkmann Instruments, Westbury, New York). Using this setup, ASTM standard D6304-04a is used to determine moisture content.

The clarity of a polymer sheet, and particularly a poly(vinyl butyral) sheet, can be determined by measuring the haze value, which is a quantification of light not transmitted through the sheet. The percent haze can be measured according to the following technique. An apparatus for measuring the amount of haze, a Hazemeter, Model D25, which is available from Hunter Associates (Reston, VA), can be used in accordance with ASTM D1003-61 (Re-approved 1977)-Procedure A, using Illuminant C, at an observer angle of 2 degrees. In various embodiments of the present invention, percent haze is less than 5%, less than 3%, and less than 1%.

Pummel adhesion can be measured according to the following technique, and where "pummel" is referred to herein to quantify adhesion of a polymer sheet to glass, the following technique is used to determine pummel. Two-ply glass laminate samples are prepared with standard autoclave lamination conditions. The laminates are cooled to about -17°C (0°F) and manually pummeled with a hammer to break the glass. All broken glass that is not adhered to the poly(vinyl butyral) sheet is then removed, and the amount of glass left adhered to the poly(vinyl butyral) sheet is visually compared with a set of standards. The standards correspond to a scale in which varying degrees of glass remain adhered to the poly(vinyl butyral) sheet. In particular, at a pummel standard of zero, no glass is left adhered to the poly(vinyl butyral) sheet. At a pummel standard of 10, 100% of the glass remains adhered to the poly(vinyl butyral) sheet. For laminated glass panels of the present invention, various embodiments have a pummel of at least 3, at least 5, at least 8, at least 9, or 10. Other embodiments have a pummel between 8 and 10, inclusive.

The "yellowness index" of a polymer sheet can be measured according to the following: transparent molded disks of polymer sheet 1 cm thick, having smooth polymeric surfaces which are essentially plane and parallel, are formed. The index is measured according to ASTM method D 1925, "Standard Test Method for Yellowness Index of Plastics" from spectrophotometric light transmittance in the visible spectrum. Values are corrected to 1 cm thickness using measured specimen thickness. In various embodiments of the present invention, a polymer sheet can have a yellowness index of 12 or less, 10 or less, or 8 or less.

By virtue of the present invention, low residual hydroxyl, low moisture content interlayers are provided for use in non autoclave lamination processes in which low moisture content interlayers are generally preferred.

### Example 1

Poly(vinyl butyral) sheets are prepared from two sets of resins. The first resin has a residual poly(vinyl alcohol) content of 18.7%, a residual poly(vinyl acetate) content of 1-2%, and a poly(vinyl butyral) content of 80%, and the second resin has a residual poly(vinyl alcohol) content of 16.0%, a residual poly(vinyl acetate) content of 1-2%, and a poly(vinyl butyral) content of 82-83%. To these resins, 39 parts per hundred resin of triethylene glycol bis-(2-ethyl)hexanoate is added as a plasticizer, and polymer sheets have a thickness of 0.76 mm (0.030 inches) are extruded and formed into sheets. Five sheets of each type are prepared, placed in an environmental chamber, and conditioned for three hours at differing relative humidities and an air temperature of 70°C. Equilibrium moisture content of the resulting sheets are measured according to the technique described elsewhere herein. Results are shown in the table below.

| Relative Humidity | Moisture Content of Sheet - 18.7% poly(vinyl alcohol) resin. | Moisture Content of Sheet - 16.0% poly(vinyl alcohol) resin. |
|---|---|---|
| 9.0 | 0.117 | 0.105 |
| 16.0 | 0.251 | 0.193 |
| 27.0 | 0.415 | 0.329 |
| 40.0 | 0.702 | 0.553 |
| 62.0 | 1.322 | 1.018 |

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

Figures are understood to not be drawn to scale unless indicated otherwise.

## Claims

1. A method of manufacturing a multiple layer glass panel, comprising:
forming a stack, wherein said stack comprises a layer of glass and a polymer sheet comprising poly(vinyl butyral), wherein said polymer sheet comprises less than 0.25 percent moisture by weight when allowed to equilibrate at 25% relative humidity, and has been formed from a poly(vinyl butyral) resin having 10.0 to 18.0 weight percent residual hydroxyl content; and,
laminating said stack using a non autoclave process.

2. The method of claim 1, wherein said resin has 12.0 to 18.0 weight percent residual hydroxyl content.

3. The method of claim 1, wherein said resin has 13.0 to 17.5 weight percent residual hydroxyl content.

4. The method of claim 1, wherein said polymer sheet comprises less than 0.15 percent moisture by weight.

5. The method of claim 1, wherein said stack further comprises a second pane of glass.

6. The method of claim 1, wherein said stack further comprises a polymer film,

7. The method of claim 1, wherein said stack further comprises a second polymer sheet.

8. The method of claim 1, wherein said non autoclave process is an applied pressure non autoclave process.

9. The method of claim 8, wherein said non autoclave process is a nip roll non autoclave process.

10. The method of claim 9, wherein said nip roll non autoclave process comprises processing said multiple layer glass panel at no more than 3 atmospheres pressure.

11. The method of claim 9, wherein said nip roll non autoclave process comprises forming a pre-laminate at a processing temperature of about 115°C to about 230°C.

12. The method of claim 9, wherein said nip roll non autoclave process comprises using a nip roll for less than about 100 seconds.

13. The method of claim 9, wherein said nip roll non autoclave process comprises using a nip roll at less than about 2,000 pounds per linear inch of roller.

14. The method of claim 9, wherein said nip roll non autoclave process does not require the use of vacuum conditions.

15. The method of claim 8, wherein said non autoclave process is a vacuum bag process.

16. The method of claim 1, wherein said non autoclave process is a vacuum chamber process

17. The method of claim 1, wherein said non autoclave process is a vacuum bag process.

18. The method of claim 17, wherein said vacuum bag process includes the steps of providing a vacuum heat to seal the said multiple layer glass panel.

19. A method of manufacturing a multiple layer glass panel, comprising:
forming a stack, wherein said stack comprises a first layer of glass, a second layer of glass, and one or more polymer layers disposed between said first layer of glass and
said second layer of glass, wherein said one or more polymer layers comprises a polymer sheet comprising poly(vinyl butyral), wherein said polymer sheet comprises less than 0.35 percent moisture by weight when allowed to equilibrate at 25% relative humidity, and is formed from poly(vinyl butyral) resin comprising 10.0 to 18.0 weight percent residual hydroxyl content; and,
laminating said stack using a non autoclave nip roll process.

## Patentansprüche

1. Verfahren zur Herstellung einer mehrschichtigen Glasplatte, umfassend:
Bilden eines Stapels, wobei der Stapel eine Glasschicht und eine Polymerfolie, die Poly(vinylbutyral) umfasst, umfasst, wobei die Polymerfolie weniger als 25 Gewichtsprozent Feuchtigkeit umfasst, wenn sie bei 25% relativer Feuchtigkeit äquilibrieren gelassen wird, und aus einem Poly(vinylbutyral)-Harz, das einen Resthydroxylgehalt von 10,0 bis 18,0 Gewichtsprozent hat, geformt worden ist, und
Laminieren des Stapels unter Verwendung eines Nicht-Autoklaven-Verfahrens.

2. Verfahren nach Anspruch 1, wobei das Harz einen Resthydroxylgehalt von 12,0 bis 18,0 Gewichtsprozent hat.

3. Verfahren nach Anspruch 1, wobei das Harz einen Resthydroxylgehalt von 13,0 bis 17,5 Gewichtsprozent hat.

4. Verfahren nach Anspruch 1, wobei die Polymerfolie weniger als 0,15 Gewichtsprozent Feuchtigkeit umfasst.

5. Verfahren nach Anspruch 1, wobei der Stapel außerdem eine zweite Glasscheibe umfasst.

6. Verfahren nach Anspruch 1, wobei der Stapel außerdem einen Polymerfilm umfasst.

7. Verfahren nach Anspruch 1, wobei der Stapel außerdem eine zweite Polymerfolie umfasst.

8. Verfahren nach Anspruch 1, wobei das Nicht-Autoklaven-Verfahren ein Nicht-Autoklaven-Verfahren mit angewandtem Druck ist.

9. Verfahren nach Anspruch 8, wobei das Nicht-Autoklaven-Verfahren ein Quetschwalzen-Nicht-Autoklaven-Verfahren ist.

10. Verfahren nach Anspruch 9, wobei das Quetschwalzen-Nicht-Autoklaven-Verfahren Bearbeiten der mehrschichtigen Glasplatte bei einem Druck von nicht mehr als 3 Atmosphären umfasst.

11. Verfahren nach Anspruch 9, wobei das Quetschwalzen-Nicht-Autoklaven-Verfahren Bilden eines Vorlaminats bei einer Bearbeitungstemperatur von etwa 115°C bis etwa 230°C umfasst.

12. Verfahren nach Anspruch 9, wobei das Quetschwalzen-Nicht-Autoklaven-Verfahren Verwenden einer Quetschwalze für weniger als etwa 100 Sekunden umfasst.

13. Verfahren nach Anspruch 9, wobei das Quetschwalzen-Nicht-Autoklaven-Verfahren Verwenden einer Quetschwalze bei weniger als etwa 2.000 Pfund pro linearem Inch an Walze umfasst.

14. Verfahren nach Anspruch 9, wobei das Quetschwalzen-Nicht-Autoklaven-Verfahren keine Verwendung von Vakuumbedingungen erfordert.

15. Verfahren nach Anspruch 8, wobei das Nicht-Autoklaven-Verfahren ein Vakuum-Gummisackverfahren ist.

16. Verfahren nach Anspruch 1, wobei das Nicht-Autoklaven-Verfahren ein Vakuum-Kammerverfahren ist.

17. Verfahren nach Anspruch 1, wobei das Nicht-Autoklaven-Verfahren ein Vakuum-Gummisackverfahren ist.

18. Verfahren nach Anspruch 17, wobei das Vakuum-Gummisackverfahren die Schritte des Bereitstellens eines Vakuumerhitzens umfasst, um die mehrschichtige Glasplatte zu versiegeln.

19. Verfahren zur Herstellung einer mehrschichtigen Glasplatte, umfassend:
Bilden eines Stapels, wobei der Stapel eine erste Glasschicht, eine zweite Glasschicht und eine oder mehrere Polymerschicht(en), die zwischen der ersten Glasschicht und der zweiten Glasschicht angeordnet sind, umfasst, wobei die eine oder mehreren Polymerschicht(en) eine Polymerfolie umfassen, die Poly(vinylbutyral) umfasst, wobei die Polymerfolie weniger als 0,35 Gewichtsprozent Feuchtigkeit umfasst, wenn sie bei 25% relativer Feuchtigkeit äquilibrieren gelassen wird, und aus Poly(vinylbutyral)-Harz, das einen Resthydroxylgehalt von 10,0 bis 18,0 Gewichtsprozent umfasst, gebildet ist, und
Laminieren des Stapels unter Verwendung eines Nicht-Autoklaven-Quetschwalzen-Verfahrens.

## Revendications

1. Procédé de fabrication d'un panneau en verre à couches multiples, comprenant :
la formation d'un empilement, dans lequel ledit empilement comprend une couche de verre et une feuille polymère comprenant du poly(vinyl butyral), dans lequel ladite feuille polymère comprend moins de 0,25 pourcent d'humidité en masse lorsqu'elle est laissée jusqu'à l'équilibre à une humidité relative de 25 %, et a été formée à partir d'une résine de poly(vinyl butyral) présentant une teneur en groupe hydroxyle résiduel de 10,0 à 18,0 pourcent en masse ; et,
la stratification dudit empilement en utilisant un procédé hors autoclave.

2. Procédé selon la revendication 1, dans lequel ladite résine présente une teneur en groupe hydroxyle résiduel de 12,0 à 18,0 pourcent en masse.

3. Procédé selon la revendication 1, dans lequel ladite résine présente une teneur en groupe hydroxyle résiduel de 13,0 à 17,5 pourcent en masse.

4. Procédé selon la revendication 1, dans lequel ladite feuille polymère comprend moins de 0,15 pourcent en masse d'humidité.

5. Procédé selon la revendication 1, dans lequel ledit empilement comprend de plus un second panneau en verre.

6. Procédé selon la revendication 1, dans lequel ledit empilement comprend de plus un film polymère.

7. Procédé selon la revendication 1, dans lequel ledit empilement comprend de plus une seconde feuille polymère.

8. Procédé selon la revendication 1, dans lequel ledit procédé hors autoclave est un procédé hors autoclave à pression appliquée.

9. Procédé selon la revendication 8, dans lequel ledit procédé hors autoclave est un procédé hors autoclave à rouleau pinceur.

10. Procédé selon la revendication 9, dans lequel ledit procédé hors autoclave à rouleau pinceur comprend le traitement dudit panneau en verre à couches multiples à une pression d'au plus 3 atmosphères.

11. Procédé selon la revendication 9, dans lequel ledit procédé hors autoclave à rouleau pinceur comprend la formation d'un pré-stratifié à une température de traitement d'environ 115°C à environ 230°C.

12. Procédé selon la revendication 9, dans lequel ledit procédé hors autoclave à rouleau pinceur comprend l'utilisation d'un rouleau pinceur pendant moins d'environ 100 secondes.

13. Procédé selon la revendication 9, dans lequel ledit procédé hors autoclave à rouleau pinceur comprend l'utilisation d'un rouleau pinceur à moins d'environ 2 000 livres par pouce linéaire de rouleau.

14. Procédé selon la revendication 9, dans lequel ledit procédé hors autoclave à rouleau pinceur n'exige pas l'utilisation de conditions de vide.

15. Procédé selon la revendication 8, dans lequel ledit procédé hors autoclave est un procédé à sac sous vide.

16. Procédé selon la revendication 1, dans lequel ledit procédé hors autoclave est un procédé à chambre sous vide.

17. Procédé selon la revendication 1, dans lequel ledit procédé hors autoclave est un procédé à sac sous vide.

18. Procédé selon la revendication 17, dans lequel ledit procédé à sac sous vide comprend les étapes de fourniture d'une chaleur sous vide pour sceller ledit panneau en verre à couches multiples.

19. Procédé de fabrication d'un panneau en verre à couches multiples, comprenant :
la formation d'un empilement, dans lequel ledit empilement comprend une première couche de verre, une seconde couche de verre, et une ou plusieurs couches polymères disposées entre ladite première couche de verre et ladite seconde couche de verre, dans lequel lesdites une ou plusieurs couches polymères comprennent une feuille polymère comprenant du poly(vinyl butyral), dans lequel ladite feuille polymère comprend moins de 0,35 pourcent d'humidité en masse lorsqu'elle est laissée jusqu'à l'équilibre à une humidité relative de 25 %, et est formée à partir de résine de poly(vinyl butyral) comprenant une teneur en groupe hydroxyle résiduel de 10,0 à 18,0 pourcent en masse ; et,
la stratification dudit empilement en utilisant un procédé hors autoclave à rouleau pinceur.
